(19) Europäisches Patentamt

European Patent Office

Office européen des brevets

(11) Publication number: **0 233 062 B1**

(12) **EUROPEAN PATENT SPECIFICATION**

(45) Date of publication of patent specification: **22.04.92**    (51) Int. Cl.⁵: **G11B 7/24**, G11B 11/10

(21) Application number: **87301018.5**

(22) Date of filing: **05.02.87**

(54) **Magneto-optic memory medium.**

(30) Priority: **05.02.86 JP 23542/86**
        **24.02.86 JP 38706/86**

(43) Date of publication of application:
     **19.08.87 Bulletin 87/34**

(45) Publication of the grant of the patent:
     **22.04.92 Bulletin 92/17**

(84) Designated Contracting States:
     **DE FR NL**

(56) References cited:
     **EP-A- 0 049 821**
     **EP-A- 0 111 988**
     **EP-A- 0 216 634**
     **NL-A- 8 501 963**
     **US-A- 4 680 742**

     **PATENT ABSTRACTS OF JAPAN, vol. 8, no.
     202 (P-300)[1639], 14th September 1984; &
     JP-A-59 84 358 (SEIKO DENSHI KOGYO K.K.)
     16-05-1984**

     **PATENT ABSTRACTS OF JAPAN, vol. 8, no.
     141 (P-283)[1578], 30th June 1984; & JP-A-59
     38 950 (SHARP K.K.) 03-03-1984**

(73) Proprietor: **Oki Electric Industry Company,
     Limited
     7-12, Toranomon 1-chome Minato-ku
     Tokyo 105(JP)**

(72) Inventor: **Asano, Mutsumi c/o Oki Electric In-
     dustry Co., Ltd.
     7-12 Toranomon 1-chome
     Minato-ku Tokyo(JP)**
     Inventor: **Kobayashi, Masanobu Oki Electric
     Industry Co., Ltd
     7-12 Toranomon 1-chome
     Minato-ku Tokyo(JP)**

(74) Representative: **Read, Matthew Charles et al
     Venner Shipley & Co. 368 City Road
     London EC1V 2OA(GB)**

## Description

This invention relates to the art of magneto-optic recording and more particularly, to erasable magneto-optic memory media having an improved protective layer which can protect a magneto-optic memory layer from corrosion and has a good magneto-optic effect enhancing function.

In recent years, erasable magneto-optic memory media have been extensively developed for use in a large capacity information memory. Magneto-optic memory media which has been developed heretofore can broadly be classified into the following three groups with respect to magneto-optic memory layers thereof.

(1) MnBi systems (MnBi, MnCuBi and the like).

(2) Oxide systems ($Y_3Ga_xFe_{5-x}O_{12}$, $Bi_xY_{3-x}GaFe_4O_{12}$, $CoFe_3O_4$, and the like).

(3) Rare earth-transition metal systems (GdFe, GdCo, TbFe, GdTbFe, TbCoFe and the like).

These magneto-optic memory layers have a common feature in that they are all a perpendicular magnetic anisotropy film in which the direction of magnetisation is perpendicular with respect to the film surface, thus enabling high density recordings to be made.

Among the above three types of magneto-optic memory media, magneto-optic memory media using rare earth metal (RE)-transition metal (TM) alloy films (RE-TM films) have recently been developed most extensively. In these RE-TM films, RE is intended to include gadolinium (Gd), terbium (Tb) or dysprosium (Dy), and TM includes iron (Fe) or cobalt (Co). This type of magneto-optic memory medium using the RE-TM film is capable of very high density recording of $10^8$ bits/cm$^2$ by a thermo- magnetic recording system using a laser beam focussed to approximately 1 micrometer in diameter and an external magnetic field.

The RE-TM alloy films may be further divided into an RE-iron alloy film and an RE-cobalt alloy failm.

The RE-iron films have good magnetic and magneto-optic characteristics and the RE-iron alloys are likely to be formed into a film whose distributions of characteristics are uniform. However, the film has the disadvantage that it is very poor in corrosion resistance and considerable pitting corrosion occurs.

In contrast, the RE-cobalt alloy films are very resistant to corrosion, but films of uniform characteristics are difficult to obtain. Because of the high Curie temperature, the RE-cobalt alloys are inferior to the RE-iron alloys with respect to thermo-magnetic recording characteristics.

Films of RE-iron alloys, to which a small amount of Co is added, are known to be improved both in regard to corrosion resistance and the magnetic and magneto-optic characteristics. However, the addition of Co causes the Curie temperature to increase sharply, which makes it difficult to record thermo-magnetically. Thus, only a small amount of Co can be added. RE-iron-cobalt films which contain a small amount of Co are superior in magnetic and magneto-optic characteristics to RE-iron and RE-cobalt films. Although slightly improved over the RE-iron films, the RE-iron cobalt films have still very poor corrosion resistance. To avoid this, it is necessary to cover the film with a protective layer.

In this connection, however, formation of the protective layer having good protective properties is not easy. For instance, where a 600 angstrom thick RE-iron-cobalt film is covered with a 1000 angstrom thick protective $SiO_2$ or SiO layer, a multitude of corrosion pits are formed on aging at 85°C and at a relative humidity of 85% for three hours. When the RE-iron-cobalt film is covered with a 1 to 2 micrometer thick polymer layer (PMMA, polycarbonates, polystyrene and the like), a great number of pits are similarly formed. Thus, there is a need for a highly corrosion-resistant protective layer.

The use of the RE-TM film as a magneto-optic memory medium involves, aside from the problem that the corrosion resistance is poor, the problem that the magneto-optic effect is not high i.e. the Kerr or Faraday rotation angle is small.

In order to enhance the magneto-optic effect, it has been proposed to coat a magneto-optic memory layer, such as the RE-TM film, on one or both sides thereof with a transparent dielectric film having a large refractive index.

The magneto-optic effect-enhancing films which have been used heretofore are dielectric films such as ZnS, SiO, and AlN. However, these films have the following various drawbacks. ZnS is disadvantageous in that although it is transparent and has a high refractive index, ZnS is apt to crystallise and the vapor pressure of S is so high that a vacuum apparatus is contaminated with S at the time of formation of the film. Moreover, upon crystallisation, the film undergoes polycrystallisation, so that light is liable to be scattered at grain boundaries with an attendant problem that noise is produced. SiO has the drawback that it absorbs a laser beam even at such a fairly long wavelength as 830 nm and that a high refractive index cannot be otained because SiO is more or less influenced by oxidation upon formation of the film. so that the refractive index varies. AlN is disadvantageous in that the AlN film is hydrolysed by means of water vapor and is poor in protection from corrosion.

None of the known protective films (or magneto-optic effect-enhancing films) described above have both a high corrosion resistance and a magneto-optic enhancing effect. Accordingly, there is a need for a protective layer which has both of these properties.

Examples of a dielectric layer for producing an improved magneto-optical effect, consisting of admixtures of $Si_3N_4$-$Al_2O_3$-$La_2O_3$ and $Si_3N_4$-AlN are described in NL-A-85 01963. An example of a corrosion resistant protective layer of $AlSi_3N_4$ is described in EP-A-0 216 634.

An object of the invention is to provide a magneto-optic memory medium which has improved corrosion resistance and magneto-optical characteristics.

To this end, the present invention is characterised by an improved protective layer comprising in a first aspect Si-Al-N and being formed by sputtering a target with a gas containing 20-40% $N_2$, said target including Al and Si with an atomic percent ratio of

$$0.2 \leq \frac{Al}{Si+Al} \leq 0.6$$

wherein the elements in said Si-Al-N protective layer are essentially covalently bonded with each other.

In a second aspect the invention is characterised by a protective layer comprising Si-Al-O-N and being formed by sputtering a target, said target including 20-33% atomic N and Al and Si with a atomic percent ratio of

$$0.4 \leq \frac{Al}{Si+Al} \leq 0.5$$

wherein the elements in said Si-Al-O-N protective layer are essentially covalently bonded with each other.

The magneto-optic memory medium of the invention may have protective layers covering the magneto-optic memory layer on both sides thereof. The same or diferent composition may be used for each protective layer. The magneto-optic memory medium may make use of the Kerr effect alone as the magneto-optic effect, but may be consistuted so as to utilise both the Kerr effect and the Faraday effect. In this case, the magneto-optic memory medium may include a reflective layer.

In order to prevent mechanical damages from outside, the magneto-optic memory medium prefereably has a cover layer on the outer surface thereof.

The invention also extends to a double sided memory medium, wherein said first and second of the inventive memory media are adhered to one another. A reflective layer may be provided in the double sided device in order to utilise both the Kerr effect and the Faraday effect.

Protective layers of the afore-indicated material covering the magneto-optic memory layer have advantages including the prevention of corrosion, the suppression in variation of a coercive force and the enhancement of the magneto-optic effect, thereby providing a magneto-optic memory medium of a high performance.

Further, a more reliable magneto-optic memory medium can be obtained by using an alloy film of rare earth metal (RE)-iron (Fe)-cobalt (Co)-titanium (Ti) as the memory layer.

In order that the invention may be more fully understood embodiments thereof will now be described by way of example with reference to the accompanying drawings wherein:

Figure 1 is a schematic sectional view of an magneto-optic memory medium according to first, second, third and fifth embodiments of the invention;

Figure 2 is an X-ray diffraction pattern of a known AlN protective film and an AlSiN protective film according to the invention;

Figure 3 is a schematic sectional view of a magneto-optic memory medium according to a fourth embodiment of the invention;

Figures 4A and 4B are, respectively, a graphical representation showing the experimental results of corrosion resistance of the fifth embodiment of the invention;

Figure 5 is a graphical representation of experimental results of the Kerr rotation angle ratio of a magneto-optic memory layer (Tb-Fe-Co-Ti alloy film) according to the fifth embodiment of the invention; and

Figures 6 to 9 are, respectively, schematic sectional views of magneto-optic memory media according to further embodiments of the invention.

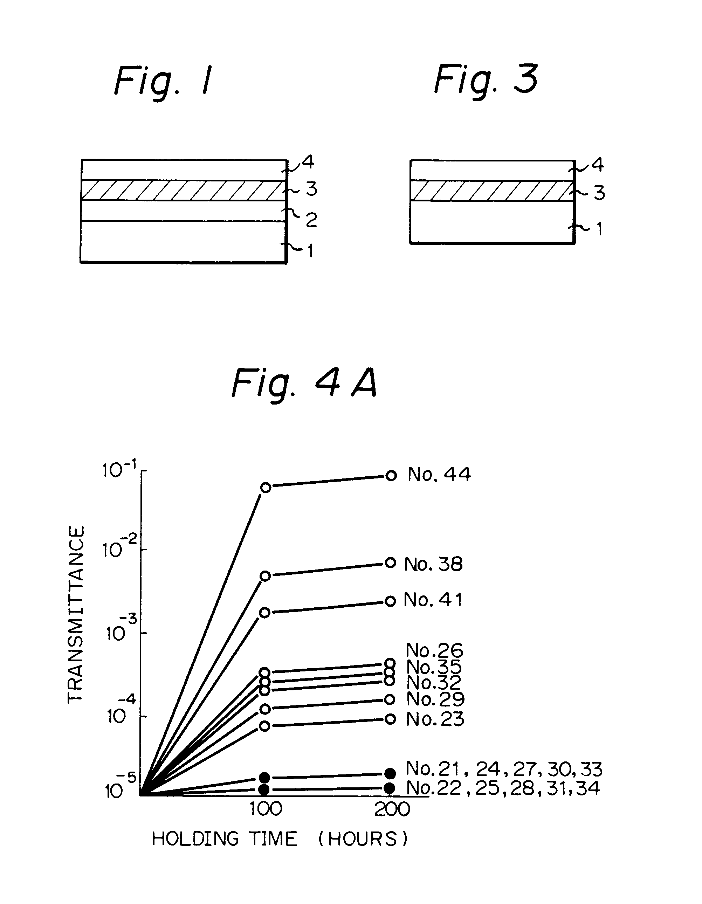

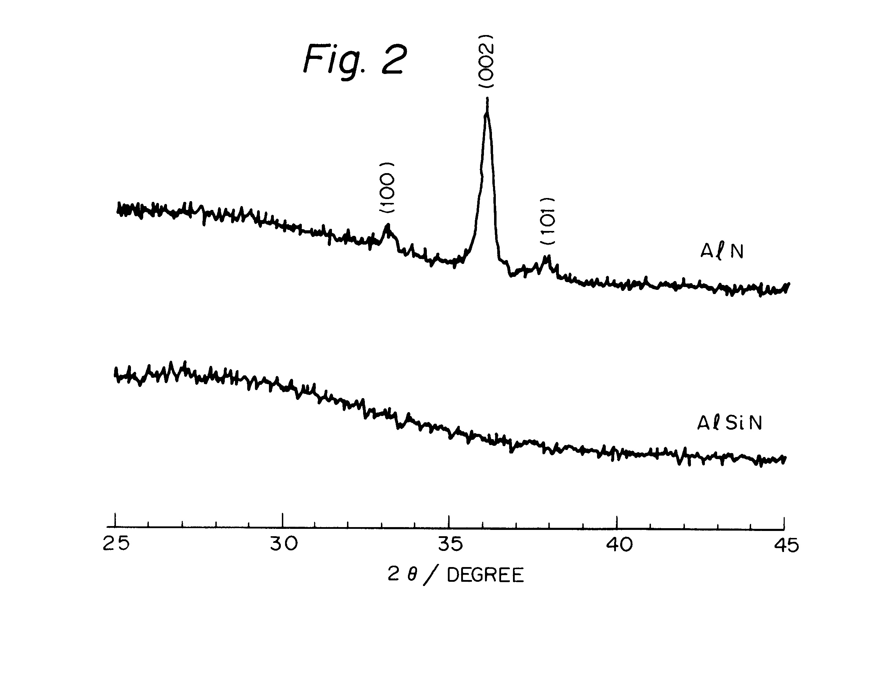

Referring firstly to Figure 1, this is a schematic sectional view of a magneto-optic memory medium according to a first embodiment of the invention. The magneto-optic memory medium has a substrate 1 made of glass having a high transparency and good optical characteristics. On the substrate 1 are formed a protective layer 2, a magneto-optic memory layer 3 made of a RE-TM film and a protective layer 4, which are superposed in this order. A laser beam (not shown) is directed onto the substrate 1 for reading, recording and erasing information to and from the magneto-optic memory medium.

The RE-TM film 3 is made of, for example, a Tb-Fe alloy of a thickness of 120 nm. The RE-TM film 3 may be constituted of Gd, Dy or the like as RE, and Co as TM. In this embodiment, in order to make clear the effects of the protective layers 2, 4, the Tb-Fe film which is very liable to corrode is used. The Tb-Fe film is made, for example, of $Tb_{31}Fe_{69}$.

The protective layers 2, 4 covering the RE-TM film 3 function to prevent the RE-TM film from corrosion, and the protective layer 2 also acts to enhance the Kerr effect.

For subsequent experiments, the lower protective layer 2 and the upper protective layer 4 are formed by sputtering to a thickness of 70 nm and 150 nm, respectively. The protective layers 2, 4 are each constituted of a covalently bonded material of, Si-Al-N or Si-Al-O-N.

It was found that when a magneto-optic memory disc was fabricated from the thus obtained magneto-optic memory medium and was subjected to writing and erasing operations under such conditions that the rotational speed of the disc was 900 r.p.m., the output power of a semiconductor laser beam used to irradiate the disc surface was 6 mw or lower, the duty ratio was 50 and a recording frequency of 1 MHz was used, the disc could withstand 100,000 or more erasing and rewriting cycles.

The protective layers 2, 4 covering the Tb-Fe alloy film 3 on opposite sides were formed of the following materials according to the following methods for comparison with regard to variation in light transmittance.

| Protective Layer | Method of forming the Protective layer |
| --- | --- |
| No. 1 $SiO_2$ | sputtering of $SiO_2$ target with Ar gas |
| No. 2 SiO | sputtering of SiO target with Ar gas |
| No. 3 Si-Al-N | sputtering of $Si_{40}Al_{60}$ target with a gas of 40% $N_2$ and 60% Ar |
| No. 4 Si-Al-N | sputtering of $Si_{80}Al_{20}$ target with a gas of 20% $N_2$ and 80% Ar |
| No. 5 Si-Al-O-N | sputtering of SiO target having an Al chip placed on the target at a ratio in area of 20% with a gas of 40% $N_2$ and 60% Ar |
| No. 6 Si-O-N | sputtering of SiO target with a gas of 40% $N_2$ and 60% Ar |
| No. 7 Al-O-N | sputtering of $Al_2O_3$ target with a gas of 40% $N_2$ and 60% Ar |
| No. 8 Si-Al-O | sputtering of $SiO_2$ target having an Al chip placed on the target at a ratio in area of 20% with Ar gas |
| No. 9 Si-Al-O-N | sputtering of $Si_3N_4$-$Al_2O_3$ sintered target with Ar gas |
| Magneto-optic memory media having the protective layers 2, 4 of Nos. 1 to 9 are, respectively, denoted as sample Nos 1 to 9. | |

It will be noted that sample Nos. 1 and 2 are of the prior art type and sample Nos. 3, 4, 5 and 9 are examples of the invention. Sample Nos. 6, 7 and 8 are given for the purposes of comparison. The mixing ratio of the gas in the formation method is by mole %.

In summary, from the foregoing, and in particular from sample Nos. 3 and 4 it can be seen that in accordance with the invention the protective layer when formed of Si-Al-N, is formed by sputtering a target with a gas containing 20-40% $N_2$, the target including Al and Si with an atomic percent ratio of:

$$0.2 \leq \frac{Al}{Si+Al} \leq 0.6$$

Similarly, when the protective layer used in the invention is formed of Si-Al-O-N, it is formed by sputtering a target, the target including 20-33% atomic N and Al and Si with an atomic percent ratio of

$$0.4 \leq \frac{Al}{Al+Si} \leq 0.5$$

As previously stated, for both forms of the protective layer, the elements are essentially covalently bonded with each other.

The sample Nos. 1 to 9 were each placed in an atmosphere of 85°C and a relative humidity of 85% and held for certain periods, after which a variation in transmittance to light at a wavelength of 514.5 nm was determined. The results are shown in Table 1 below.

Table 1

| Holding Time Sample No. | 0 Hr. | 100 Hrs. | 240 Hrs. | 710 Hrs. |
|---|---|---|---|---|
| 1 | $2 \times 10^{-7}$ | $2.21 \times 10^{-5}$ | $3.95 \times 10^{-5}$ | $4.63 \times 10^{-5}$ |
| 2 | $8 \times 10^{-7}$ | $1.45 \times 10^{-3}$ | $1.59 \times 10^{-3}$ | $1.76 \times 10^{-3}$ |
| 3 | $1.1 \times 10^{-6}$ | $1.14 \times 10^{-5}$ | $1.34 \times 10^{-5}$ | $1.36 \times 10^{-5}$ |
| 4 | $1.2 \times 10^{-6}$ | $1.38 \times 10^{-5}$ | $1.44 \times 10^{-5}$ | $1.50 \times 10^{-5}$ |
| 5 | $1.0 \times 10^{-7}$ | $1.33 \times 10^{-6}$ | $1.35 \times 10^{-6}$ | $1.36 \times 10^{-6}$ |
| 6 | $1.4 \times 10^{-6}$ | $1.89 \times 10^{-5}$ | $1.96 \times 10^{-5}$ | $2.20 \times 10^{-5}$ |
| 7 | $1.6 \times 10^{-6}$ | $2.00 \times 10^{-5}$ | $2.22 \times 10^{-5}$ | $2.67 \times 10^{-5}$ |
| 8 | $1.2 \times 10^{-7}$ | $1.00 \times 10^{-6}$ | $1.21 \times 10^{-6}$ | $1.30 \times 10^{-6}$ |
| 9 | $1.4 \times 10^{-7}$ | $9.60 \times 10^{-7}$ | $1.10 \times 10^{-6}$ | $1.17 \times 10^{-6}$ |

When the sample Nos. 1 to 9 are held in the above atmosphere, pitting corrosion takes place until the Tb-Fe film is punctured by the corrosion. This is why, as will be apparent from Table 1, the transmittance increases with an increasing degree of pitting corrosion.

The variations in transmittance (i.e. an increase in degree of pitting corrosion in Table 1 reveal that while $SiO_2$ used in the known sample No. 1 has a fairly great protective function against pitting corrosion, the known sample No. 2 using SiO reaches four times the transmittance of the sample No. 1, due to a multitude of pits being formed and grown. On the other hand, the sample Nos. 3, 4, 5 and 9, which constitute embodiments of the invention, permit only a small number of pits to be formed and thus, little variation takes place in the transmittance.

The variation of coercive force of the sample Nos. 1 to 9 will now be described.

The coercive force of the TbFe film varies depending on the selective oxidation of Tb. The RE-TM films of the sample Nos. 1 to 9 are all made of a position of $Tb_{31}Fe_{69}$ which is rich in Tb, so that at an initial stage of aging, the coercive force increases. Subsequently, the composition changes such that the coercive force becomes a maximum, after which the coercive force decreases. The variation in coercive force of the sample Nos. 1 to 9, when the respective samples are kept in an atmosphere of a temperature of 85°C and at a relative humidity of 85% is shown in Table 2 below.

Table 2

| Holding Time Sample No. | 0 Hr. | 100 Hrs. | 240 Hrs. | 710 Hrs. |
|---|---|---|---|---|
| 1 | 25.47 | 30.25 | 36.62 | 54.13 |
| 2 | 24.68 | 25.47 | 25.47 | 27.86 |
| 3 | 23.08 | 23.08 | 23.08 | 23.08 |
| 4 | 24.68 | 24.68 | 24.68 | 26.27 |
| 5 | 25.47 | 25.47 | 25.47 | 25.47 |
| 6 | 24.68 | 24.68 | 25.47 | 27.06 |
| 7 | 23.08 | 23.08 | 23.08 | 24.68 |
| 8 | 23.88 | 23.88 | 24.68 | 24.68 |
| 9 | 23.08 | 23.08 | 23.88 | 23.88 |
| Unit = $\times 10^4$ A/M | | | | |

As will be apparent from the results of Table 2, the known sample No. 2 using SiO, tends to keep a constant coercive force, but the sample No. 1 using $SiO_2$ exhibits a considerable variation in coercive force to an extent of more than two times the initial value.

On the other hand, sample Nos. 3, 4, 5 and 9 according to the invention exhibit little variation in the coercive force.

As will be appreciated from the above, the protective layers of sample Nos. 3, 4, 5 and 9 can suppress occurrence and growth of pitting corrosion to prevent the corrosion of the magneto-optic memory layer. In addition, the protective layer has the function of suppressing the variation in coercive of the magneto-optic layer.

The refractive index of the protective layers of the sample Nos. 1 to 9 at a wavelength of 830 nm was as follows.

No. 1 = 1.45, No. 2 = 1.76, No. 3 = 2.03, No. 4 = 1.98, No. 5 = 1.84, No. 6 = 1.82, No. 7 = 1.84, No. 8 = 1.78, No. 9 = 1.94.

Furthermore, it is to be noted that the protective layer of the sample No. 2 is absorptive to light at a wavelength of 830 pm but the protective layers of the other sample were relatively transparent in comparison to sample No. 2.

The structure of the protective layer according to the invention was analysed by an X-ray diffraction analysis and an X-ray photoelectric spectrometry (XPS). In Figure 2, there are shown an X-ray diffraction pattern of the AIN film for comparison and an X-ray diffraction pattern of SiAIN film of sample No. 3 according to the invention. As will be apparent from Figure 2, crystallisation is found in the AIN film, but the SiAIN film is found to be amorphous. The protective layers of sample Nos. 1 to 9 were all amorphous in nature.

The SiAIN of sample No. 3, the SiAION of sample No. 5, the SiON of sample No. 6 and the SiN and AIN for comparison were subjected to X-ray photoelectric spectrometry. The results of the attribution of spectra $Si_{2p}$ and $Al_{2p}$ (in which the suffix, 2p, is the electron orbit number) by a peak isolation technique are shown in Tables 3A and 3B

6

Table 3A

| Results in the Attribution of $Si_{2p}$ spectra | | | | | | |
|---|---|---|---|---|---|---|
| | Si | SiNx | AlSiN | $Si_3N_4$ | SiON | $SiO_2$ |
| AlSiN | 11 99.0 | | 81 100.8 | 8 101.5 | | |
| AlSiON | 3 99.1 | | 21 100.8 | | 66 102.1 | 10 103.3 |
| SiN | 2 99.1 | 14 100.3 | | 64 101.6 | 20 102.4 | |
| SiON | | | | 8 101.5 | 37 102.5 | 63 103.3 |

Table 3B

| Results of the Attribution of $Al_{2p}$ Spectra | | | |
|---|---|---|---|
| | AlSiN | AlN | $Al_2O_3$ |
| AlSiN | 100 73.4 | | |
| AlSiON | 9 73.4 | 34 74.2 | 57 74.8 |
| AlN | | 82 73.9 | 18 74.8 |

In the Tables 3A and 3B, at each position, two numbers are given. The number on the underside of each table position gives the bonding energy attributed to the materials stated in the column headings, in electron volts (ev), and the number on the upper side gives the percentage of the bonding state of the material having the stated bonding energy.

As will be clear from the results of Tables 3A and 3B, SiAlN and SiAlON both exhibit bond energy values of 100.8 eV at $Si_{2p}$ and 73.4 eV at $Al_{2p}$, which are different from those values of existing substances, ensuring that the SiAlN and SiAlON have, respectively, specific distinctive bonding characteristics. Upon considering the results of the X-ray diffraction and the X-ray photoelectric spectrometry in combination, the SiAlN and SiAlON will be found not to be mere mixtures of SiN, AlN, SiO and $Al_2O_3$, but are believed to have covalent bond characteristics in which Si, Al, N and/or O are bonded three-dimensionally.

A second embodiment of the invention will now be described.

The arrangement of the second embodiment is the same as that shown in Fig. 1 and includes, for example a substrate 1 which is made of a polycarbonate disk having 1.6 micrometer wide pregrooves. On the substrate 1 are successively superposed a protective layer 2, a 90 nm thick magneto-optic memory layer 3 consisting of $Tb_{31}Fe_{69}$, and a 100 nm thick protective layer 4, thereby fabricating a magneto-optic memory disk. The protective layer 2 was deposited in different thicknesses of 75 nm, 80 nm and 85 nm.

The protective layers 2 and 4 were both made of the same material, namely, one of the protective layers of sample Nos. 1 to 9 was used as the protective layers 2 and 4. For comparison, a magneto-optic memory disk was fabricated in which no protective layer 2 was provided and SiO was used as the protective layer 4.

The disks were subjected to measurement of a C/N value (carrier-to-noise ratio) under conditions of the number of revolutions of the disk of 900 r.p.m., a recording frequency of 1 MHz, a duty ratio of 50%, a recording power of 8 to 12 mW, an erasing power of 12mW, an external magnetic field of 47748 A/m (600 Oe), and a reading power of 1 to 2 mW. The results are shown in Table 4. The C/N values of the respective disks indicated in Table 4 are maximum values obtained when the thickness of the protective layer 2, the recording power and the reading power were changed.

Table 4

| Protective Layer 2 | nil | No.1 | No. 2 | No.3 | No.4 | No.5 | No.6 | No.7 | No.8 | No.9 |
|---|---|---|---|---|---|---|---|---|---|---|
| Thickness of Layer 2 | - | 75mm | 80mm | 80mm | 80mm | 80mm | 80mm | 80mm | 85mm | 80mm |
| C/N Value | 40dB | 38dB | 41dB | 45dB | 45dB | 44dB | 44dB | 44dB | 43dB | 45dB |

Nos. 1 to 9 in Table 4 are intended to mean that the protective layers used correspond to those of sample Nos. 1 to 9, respectively.

As will be clearly seen from Table 4, the magneto-optic memory media using the protective layers of sample Nos. 3, 4, 5 and 9 as the protective layer 2 were found to have improved C/N values by 3 to 5 dB. Thus, it will be seen that the protective layers can enhance the Kerr effect.

The improvement of the C/N values is considered to be ascribed to good optical characteristics, i.e. good transparency and a high refractive index, of the protective layer 2 in Fig. 1. In this sense, the materials used for the protective layer of the invention may be applied only to the protective layer 2 in order to protect the layer from corrosion and enhance the Kerr effect. In this case, the protective layer 4 may be made of a material different from that used for the protective layer 2.

A third embodiment of the invention will now be described.

The arrangement of the third embodiment is just the same as shown in Fig. 1. On a substrate 1 made of a polycarbonate, is successively superposed a 75 nm thick protective layer 2, a 120 nm thick magneto-optic memory layer 3 made of $Tb_{31}Fe_{69}$, and a 150 nm thick protective layer 4, thereby fabricating a magneto-optic memory medium.

The protective layers 2, 4 were both made of the same material and one of the protective layers of sample Nos. 1 to 9 was used as she layers 2, 4. In addition, each protective layers of sample Nos. 10 to 14 indicated below was also used as the protective layers 2, 4.

| Protective Layer | Method of Forming the Protective Layer |
|---|---|
| No. 10 Si-Al-N | reactive sputtering of $Si_{60}Al_{40}$ target with a mixed gas of 20% $N_2$ and 80% Ar |
| No. 11 Si-Al-O-N | sputtering of $SiO_2$-AlN target with Ar gas |
| No. 12 Si-Al-O-N | sputtering of $(Si_3N_4)$-$(Al_2O_3)$ target with Ar gas |
| No. 13 SiN | reactive sputtering of Si target with a mixed gas of 20% $N_2$ and 80% Ar |
| No. 14 AlN | reactive sputtering of Al target with a mixed gas of 20% $N_2$ and 80% Ar |

The magneto-optic memory media having the protective layers of Nos. 1 to 14 are referred to as sample Nos. 1 to 14, respectively. The sample Nos. 1, 2, 13 and 14 are known media for comparison, and the sample Nos. 3, 4, 5, 9, 10, 11 and 12 are the media of the present invention. Sample Nos. 6, 7 and 8 are given for purposes of comparison. The mixing ratio of the gases in "Method of Forming the Protective Layer " is by mole percent.

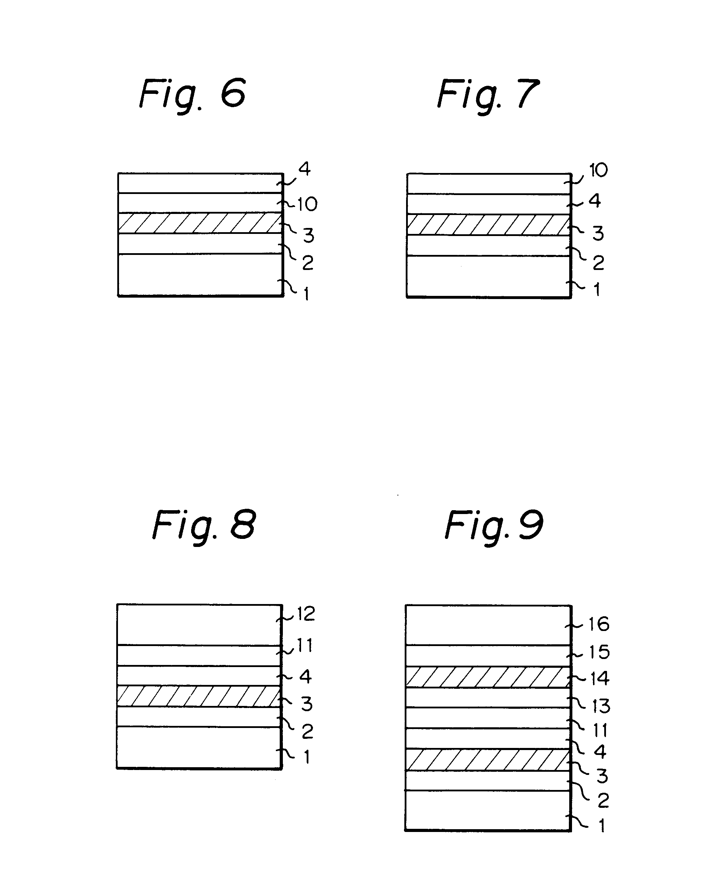

These samples were each placed and held in an atmosphere of 85°C and a relative humidity of 85% for certain periods of time and subjected to measurements of a variation of reflectivity and a variation of the Kerr rotation angle. The reflectivity and the Kerr rotation angle were measured from the side of the substrate 1. In Table 5, there are shown the results on the reflectivity which was indicated as an index to an initial value. In Fig. 6, there are similarly shown the results on the variation of the Kerr rotation angle which is indicated as an index to an initial value.

Table 5

| Variation of Reflectivity | | | | | |
|---|---|---|---|---|---|
| Holding Time <br> Sample No. | 100 hrs. | 230 hrs. | 460 hrs. | 740 hrs. | 1200 hrs. |
| 1 | 0.90 | 0.78 | 0.62 | 0.48 | 0.43 |
| 2 | 0.96 | 0.90 | 0.74 | 0.62 | 0.54 |
| 3 | 1.00 | 0.99 | 0.96 | 0.94 | 0.91 |
| 4 | 1.00 | 1.00 | 0.98 | 0.94 | 0.92 |
| 5 | 1.00 | 1.00 | 0.99 | 0.96 | 0.93 |
| 6 | 1.00 | 0.98 | 0.96 | 0.93 | 0.89 |
| 7 | 0.99 | 0.97 | 0.95 | 0.92 | 0.88 |
| 8 | 1.00 | 0.99 | 0.96 | 0.94 | 0.90 |
| 9 | 1.00 | 1.00 | 1.00 | 0.98 | 0.97 |
| 10 | 1.00 | 1.00 | 0.98 | 0.97 | 0.96 |
| 11 | 1.00 | 0.99 | 0.96 | 0.94 | 0.91 |
| 12 | 1.00 | 0.99 | 0.97 | 0.95 | 0.93 |
| 13 | 0.98 | 0.94 | 0.89 | 0.74 | 0.62 |
| 14 | 0.56 | 0.40 | 0.32 | 0.28 | 0.21 |

Table 6

| Variation of the Kerr Rotation Angle | | | | | |
|---|---|---|---|---|---|
| Holding Time <br> Sample No. | 100 hrs. | 230 hrs. | 460 hrs. | 740 hrs. | 1200 hrs. |
| 1 | 0.88 | 0.72 | 0.44 | 0.29 | 0.12 |
| 2 | 0.98 | 0.96 | 0.88 | 0.82 | 0.76 |
| 3 | 1.00 | 1.00 | 0.98 | 0.96 | 0.94 |
| 4 | 1.00 | 0.99 | 0.97 | 0.96 | 0.92 |
| 5 | 1.00 | 1.00 | 1.00 | 0.98 | 0.96 |
| 6 | 1.00 | 0.98 | 0.96 | 0.92 | 0.88 |
| 7 | 1.00 | 0.98 | 0.95 | 0.91 | 0.89 |
| 8 | 1.00 | 0.99 | 0.97 | 0.95 | 0.90 |
| 9 | 1.00 | 1.00 | 0.99 | 0.98 | 0.96 |
| 10 | 1.00 | 0.99 | 0.99 | 0.98 | 0.97 |
| 11 | 1.00 | 1.00 | 0.99 | 0.98 | 0.96 |
| 12 | 1.00 | 0.99 | 0.98 | 0.94 | 0.94 |
| 13 | 0.98 | 0.94 | 0.88 | 0.83 | 0.78 |
| 14 | 0.79 | 0.67 | 0.38 | 0.23 | 0.13 |

As will be apparent from Tables 5 and 6, the samples having protective layers in accordance with the invention can suppress the variations of the reflectivity and the Kerr rotation angle that would otherwise occur to very small values even though the magneto-optic memory layer is made of TbFe which is inherently very liable to be corroded. With the sample No. 14 using AlN, the protective layer 4 was observed to suffer a change and the magneto-optic memory layer of TbFe involves a multitude of corrosion pits.

A fourth embodiment of the present invention will now be described.

A magneto-optic memory medium according to this embodiment has such an arrangement as shown in Figure 3. This medium has a glass substrate 1, on which a 120 nm thick magneto-optic memory layer 3 made of $Tb_{31}Fe_{69}$ and a 150 nm thick protective layer 4 are formed. The protective layer 4 used is any of the protective layers of sample Nos. 1 to 9 described hereinbefore.

These samples were placed and held in an atmosphere of 85°C and a relative humidity of 85% for certain periods of time and subjected to measurement of a variation in transmittance to light of 514.5 nm

9

wavelength. The results are shown in Table 7.

Table 7

| Holding Time<br>Sample No. | 0 Hr. | 100 Hrs. | 240 Hrs. | 710 Hrs. |
|---|---|---|---|---|
| 1 | $1.7 \times 10^{-7}$ | $4.1 \times 10^{-5}$ | $8.2 \times 10^{-5}$ | $1.10 \times 10^{-4}$ |
| 2 | $5.10 \times 10^{-7}$ | $2.0 \times 10^{-3}$ | $2.3 \times 10^{-3}$ | $2.8 \times 10^{-3}$ |
| 3 | $1.30 \times 10^{-6}$ | $1.41 \times 10^{-5}$ | $1.67 \times 10^{-5}$ | $2.00 \times 10^{-5}$ |
| 4 | $1.00 \times 10^{-6}$ | $1.52 \times 10^{-5}$ | $1.94 \times 10^{-5}$ | $2.10 \times 10^{-5}$ |
| 5 | $4.10 \times 10^{-7}$ | $1.70 \times 10^{-6}$ | $1.80 \times 10^{-6}$ | $1.90 \times 10^{-6}$ |
| 6 | $1.10 \times 10^{-6}$ | $2.10 \times 10^{-6}$ | $2.20 \times 10^{-6}$ | $2.50 \times 10^{-6}$ |
| 7 | $1.00 \times 10^{-6}$ | $2.05 \times 10^{-5}$ | $2.30 \times 10^{-5}$ | $2.90 \times 10^{-6}$ |
| 8 | $1.80 \times 10^{-7}$ | $1.00 \times 10^{-6}$ | $1.25 \times 10^{-6}$ | $1.45 \times 10^{-6}$ |
| 9 | $1.30 \times 10^{-7}$ | $2.05 \times 10^{-7}$ | $1.10 \times 10^{-6}$ | $1.30 \times 10^{-6}$ |

As is clealy seen in Table 7, the protective layers of Nos. 3 to 9 according to the invention can satisfactorily protect the magneto-optic memory layer 3 when the protective layer 4 alone is formed without providing any protective layer 2 as in Fig. 1. Thus, these protective layers may be used as a mere protective layer without enhancing the Kerr effect.

A fifth embodiment of the invention will now be described.

The arrangement of a magneto-optic memory medium in this embodiment is as shown in Fig. 1.

This magneto-optic memory medium has a substrate 1 made of a glass plate or resin plate which has a high transparency and good optical characteristics. On the substrate 1 are superposed a 75 nm thick protective layer 2, a 120 nm thick magneto-optic memory layer 3 made of a RE-TM material, and a 100 nm thick protective layer in this order.

The protective layers 2, 4 can protect the magneto-optic memory layer 3 and are each formed of the same material as used in the protective layers of Nos. 1 to 9 described before. The protective layers 2, 4 in this embodiment are also made of a covalent bond material of Si-Al-N or Si-Al-O-N. The protective layer 2 functions to enhance the Kerr effect.

The RE-TM layer forming the magneto-optic memory layer 3 is made, for example, of a RE-Fe-Co-Ti alloy with a thickness of, for example, 120 nm, in which RE represents a rare earth metal such as Tb. The amount of Tb is in the range of from 18 to 35 atomic percent of the total of the Re-Fe-Co-Ti alloy. The amount of Co is from 0 to 20 atomic percent of the total of the alloy. The amount of Ti is from 2 to 15 atomic percent of the total of Fe-Co-Ti.

A magneto-optic memory disk is fabricated from the thus arranged magneto-optic memory medium. When the disk was irradiated with a semiconductor laser beam having an output power of 6 mW or below while rotating at 900 r.p.m., fine recording bits with a size of approximately 1 micrometer could be obtained. It was confirmed that the disk could withstand repetition of at least 1,000,000 erasing and rewriting cycles.

Magneto-optic memory media using a glass substrate as the substrate 1 and materials, indicated in Table 8, as the protective layers 2, 4 and the magneto-optic memory layer (RE-TM layer) 3 were subjected to a corrosion-resistance test.

Table 8

| Protective Layer | RE-TM Layer | | |
|---|---|---|---|
| | A | B | C |
| Si-Al-N | No. 21 | No. 22 | No. 23 |
| Si-Al-O | No. 24 | No. 25 | No. 26 |
| Si-Al-O-N | No. 27 | No. 28 | No. 29 |
| Si-O-N | No. 30 | No. 31 | No. 32 |
| Al-O-N | No. 33 | No. 34 | No. 35 |
| SiO | No. 36 | No. 37 | No. 38 |
| $SiO_2$ | No. 39 | No. 40 | No. 41 |
| nil | No. 42 | No. 43 | No. 44 |

RE-TM layer A: $Tb_{30}(Ti_4Co_{10}Fe_{86})_{70}$

RE-TM layer B: $Tb_{30}(Ti_8Co_{10}Fe_{82})_{70}$

RE-TM layer C: $Tb_{30}Fe_{70}$

Nos. 21 - 44: sample numbers

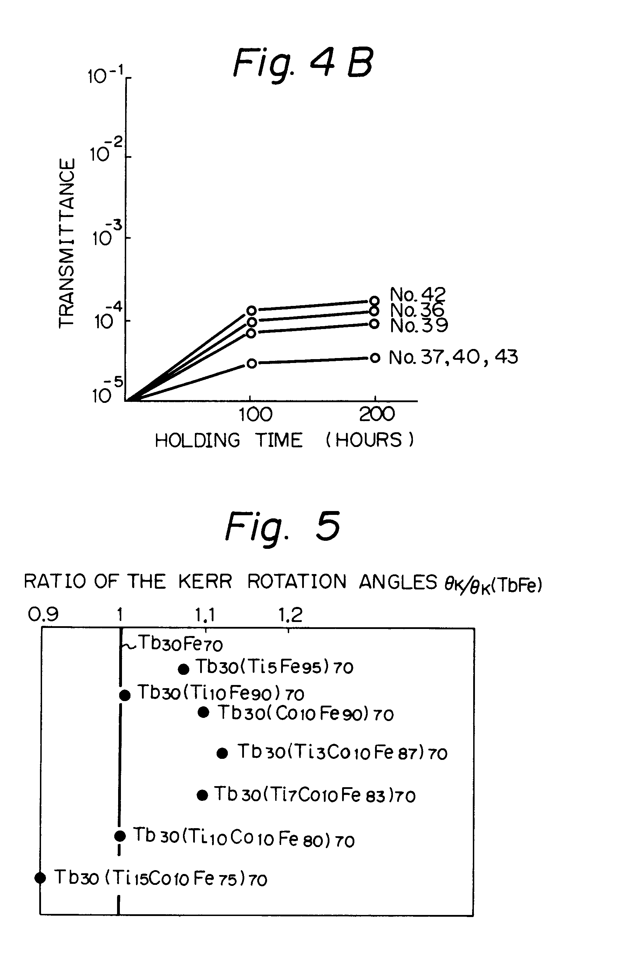

As a result, it was found that the magneto-optic memory media Nos. 21, 22, 27 and 28 in accordance with the invention had a high resistance to corrosion. The corrosion resistance is more particularly described with reference to Fig. 4A and 4B.

Fig. 4A and 4B show a variation in transmittance of the sample Nos. 21 to 44 after having been kept in an atmosphere of 85°C and 85% relative humidity. When the sample is kept in such an atmosphere, pits which pass through the thin film are formed. An increasing degree of pits results in an increase of the transmittance.

The magneto-optic memory media according to this embodiment have the RE-TM film which is highly resistant to corrosion and the protective layers 2, 4. Thus the media become very highly resistant to corrosion and very reliable.

Fig. 5 shows the Kerr rotation angle, k, of the respective RE-TM layers in this embodiment. This angle, k, is a very important magneto-optic characteristic and is indicated as a ratio to an angle for $Tb_{30}Fe_{70}$ in Fig. 5.

As will be apparent from Fig. 5, the Kerr rotation angle, $\theta$ k, varies with the amount of Ti. The reason why the amount of Ti is from 2 to 15% of Fe + Co + Ti is that Ti shows a great effect on the corrosion resistance and such a range as indicated above is a range where no magnetic and magneto-optic characteristics deteriorate or where no problem of the deterioration is presented. A small and defined range in the amount of Ti can improve the magneto-optic characteristics.

The amount of Tb is from 18 to 35% of the total composition, within which the RE-TM layer becomes a perpendicular magnetic anisotropy film. Co can increase the Kerr rotation angle, k, but can also rapidly increases the Curie point. Accordingly, if Co is added in excess, thermo-magnetic recording becomes difficult. Accordingly, the Co content does not exceed 20%.

As will be understood from the foregoing, when the protective layer of a specific type of material and a corrosion-resistant TbFeCoTi film are used in combination, the resultant magneto-optic memory medium exhibits a high corrosion resistance. In addition, the medium have excellent writing and reading characteristics since the protective layer has a good function of enhancing the Kerr effect and the Tb-FeCoTi film has good magneto-optic characteristics.

Tb is used as RE in the RE-Fe-Co-Ti alloy, but should not be limited thereto. One or more rare earth metals such as Tb, Dy, Gd, Nd and the like in the RE-Fe-Co-Ti alloy may be used with similar results with respect to the effect of corrosion registance. In this case the effect of addition of Ti in the RE-Fe-Co-Ti alloy is also the same as that in the Tb-Fe-Co-Ti alloy. Figs. 6 to 9 are magneto-optic memory media according to further embodiments of the invention.

A magneto-optic memory medium in Fig. 6 has such a structure that a reflective layer 10 is provided between the magneto-optic memory layer 3 and the protective layer 4 of the foregoing embodiments.

The magneto-optic memory medium of Fig. 7 has a reflective layer 10 on the protective layer 4.

The magneto-optic memory media according to the embodiments of Figs. 6 and 7 thus utilize the Kerr and Faraday effects as the magneto-optic effects.

The magneto-optic memory medium of Fig. 8 has such an arrangement that a cover substate 12 is adhered to the protective layer 4 by an adhesive layer 11. The cover substrate 12 is provided so as to prevent mechanical breakage and the surface contamination of the magneto-optic memory layer 3 and the protective layer 4.

Fig. 9 shows a double side recording type magneto-optic memory medium which has first and second units. The first unit has a substrate 1, a first protective layer 2, a magneto-optic memory layer 3 and a second layer 4 superposed in this order, and the second unit has a substrate 16, a first protective layer 15, a magneto-optic memory layer 14, and a second protective layer 13 superposed in this order. The first and second units are adhered to each other by an adhesive layers 11 in such a way that the second protective layers 4, 13 of the respective units are facing each other.

When the magneto-optic memory medium of Fig. 1 is so modified as in Figs. 6 to 9, similar effects as in Fig. 1 can be obtained. The present invention is not limited to those embodiments described hereinbefore, other modifications or variations being possible, for example, as follows.

The substrates 1, 12 and 16 may be constituted of, aside from glass and resin plates, other materials in the form of a plate, sheet, tape or the like.

In the magneto-optic memory media of the foregoing embodiments, reference is mainly made to the protective layers 2 and 4 which are made of the same material selected from sample Nos. 3, 4, 5, 9, 10, 11 and 12. However, either the protective layer 2 or 4 may be made of a material used in the sample Nos. aforesaid and the other protective layer may be made of a different material. In this case, the other protective layer is preferably made of a material which is other than that selected as the first protective layer but is selected from sample Nos. 3, 4, 5, 9, 10, 11 or 12, although other types of material may be used in the practice of the invention.

The protective layers of the media according to the invention have good protection from corrosion and are thus stable, have a good shielding effect against oxygen and moisture and have high transparency and good refractive index. Thus, such protective layers are not only applicable as protective layer for amorphous or crystalline RE-TM films, but also applicable as a protective layer for MnBi-base and oxide base magneto-optic memory layers in order to provide protection and/or ensure enhancement of the Kerr effect.

## Claims

1. A magneto-optic memory medium which comprises an optically transparent substrate (1), and a magneto-optic memory layer (3) and a protective layer (2, 4) covering a side of said magneto-optic memory layer, superposed on said substrate, characterised by said protective layer comprising Si-Al-N and being formed by sputtering a target with a gas containing 20-40% of $N_2$, said target including Al and Si with an atomic percent ratio of

$$0.2 \leq \frac{Al}{Si+Al} \leq 0.6$$

wherein the elements in said Si-Al-N protective layer are essentially covalently bonded with each other.

2. A magneto-optic memory medium which comprises an optically transparent substrate (1) and a magneto-optic memory layer (3) and a protective layer (2, 4) covering a side of said magneto-optic memory layer, superposed on said substrate, characterised by said protective layer comprising Si-Al-O-N and being formed by sputtering a target, said target including 20-33 atomic % N and Al and Si with a atomic percent ratio of

$$0.4 \leq \frac{Al}{Si+Al} \leq 0.5$$

wherein the elements in said Si-Al-O-N protective layer are essentially covalently ended with each other.

3. A magneto-optic memory medium according to claim 1 or 2, wherein said magneto-optic memory layer (3) is covered with said protective layer (2, 4) on both sides thereof.

4. A magneto-optic memory medium according to claim 1 or 2, wherein said magneto-optic memory layer (3) is covered with said protective layer (2, 4) on one side thereof and with a protective layer (2) made of a material other than that of said protective layer (4) on the other side thereof.

5. A magneto-optic memory medium according to claim 3 or 4, further comprising a reflective layer (10) which is formed directly on said magneto-optic memory layer (3) or formed on the one of said protective layers (4) which is most remote from said the substrate.

6. A magneto-optic memory medium according to claim 3 or 4, wherein the protective layer (4) most remote from the substrate is covered by a cover substrate (12).

7. A magneto-optic memory medium according to claim 5, wherein said magneto-optic memory layer (3) has on the side thereof most remote from the substrate said protective layer (4), a reflective layer (10) and said cover substrate (12) superposed in this order, said cover substrate (12) being adhered to said reflective layer (10).

8. A magneto-optic memory medium according to any one of preceeding claims wherein said magneto-optic memory layer (3) is made of a rare earth metal (RE)-iron (Fe)-cobalt (co)-titanium (Ti) alloy in which the rare earth metal is a member selected from the group consisting of terbium, dysprosium, gadolinium and neodymium.

9. A double sided magneto-optic memory medium, including first and second magneto-optic memory media each according to any preceding claim, adhered to one another.

**Revendications**

1. Support de mémoire magnéto-optique qui comporte un substrat optiquement transparent (1), et une couche de mémoire magnéto-optique (3) et une couche protectrice (2, 4) recouvrant une face de ladite couche de mémoire magnéto-optique, superposées sur ledit substrat, caractérisé en ce que ladite couche protectrice comprend du Si-Al-N et est formée par projection sur une cible d'un gaz contenant 20-40 % de $N_2$, ladite cible comprenant du Al et du Si avec un rapport de pourcentages atomiques de

$$0,2 \leq \frac{Al}{Si+Al} \leq 0,6$$

dans lequel les éléments de ladite couche protectrice en Si-Al-N sont essentiellement en liaison de covalence entre eux.

2. Support de mémoire magnéto-optique qui comporte un substrat optiquement transparent (1) et une couche de mémoire magnéto-optique (3) et une couche protectrice (2, 4) recouvrant une face de ladite couche de mémoire magnéto-optique, superposées sur ledit substrat, caractérisé en ce que ladite couche protectrice comprend du Si-Al-O-N et est formée par pulvérisation sur une cible, ladite cible comprenant 20-33 % de N en valeur atomique et du Al et du Si avec un rapport des pourcentages atomiques de

$$0,4 \leq \frac{Al}{Si+Al} \leq 0,5$$

dans lequel les éléments dans ladite couche protectrice de Si-Al-O-N sont essentiellement en liaison de covalence entre eux.

3. Support de mémoire magnéto-optique selon la revendication 1 ou 2, dans lequel ladite couche de mémoire magnéto-optique (3) est recouverte de ladite couche protectrice (2, 4) sur ses deux faces.

4. Support de mémoire magnéto-optique selon la revendication 1 ou 2, dans lequel ladite couche de mémoire magnéto-optique (3) est recouverte de ladite couche protectrice (2, 4) sur l'une de ses faces et d'une couche protectrice (2) formée d'une matière autre que celle de ladite couche protectrice (4) sur l'autre de ses faces.

5. Support de mémoire magnéto-optique selon la revendication 3 ou 4, comportant en outre une couche réfléchissante (10) qui est formée directement sur ladite couche de mémoire magnéto-optique (3) ou qui est formée sur l'une desdites couches protectrices (4) qui est la plus éloignée dudit substrat.

6. Support de mémoire magnéto-optique selon la revendication 3 ou 4, dans lequel la couche protectrice (4) la plus éloignée du substrat est recouverte d'un substrat (12) de recouvrement.

7. Support de mémoire magnéto-optique selon la revendication 5, dans lequel ladite couche de mémoire magnéto-optique (3) comporte, sur sa face la plus éloignée du substrat, ladite couche protectrice (4), une couche réfléchissante (10) et ledit substrat (12) de recouvrement, superposés dans cet ordre, ledit substrat (12) de recouvrement étant collé à ladite couche réfléchissante (10).

8. Support de mémoire magnéto-optique selon l'une quelconque des revendications précédentes, dans lequel ladite couche de mémoire magnéto-optique (3) est formée d'un alliage métal type terre rare (RE)-fer (Fe)-cobalt (Co)-titane (Ti) dans lequel le métal du type terre rare est un élément choisi dans le groupe constitué du terbium, du dysprosium, du gadolinium et du néodyme.

9. Support de mémoire magnéto-optique double face comprenant des premier et second supports de mémoire magnéto-optique chacun selon l'une quelconque des revendications précédentes, collés entre eux.

**Patentansprüche**

1. Magneto-optisches Speichermedium, das aufweist ein optisch transparentes Substrat (1) und eine magneto-optische Speicherschicht (3) und eine Schutzschicht (2,4), die eine Seite der magneto-optischen Speicherschicht bedeckt, übereinander auf dem Substrat angeordnet, dadurch gekennzeichnet, daß die Schutzschicht Si-Al-N aufweist und durch Zerstäuben eines Targets mit einem Gas gebildet wird, das 20-40% $N_2$ enthält, wobei das Target Al und Si mit einem atomaren Prozentverhältnis von

$$0,2 \leq \frac{Al}{Si+Al} \leq 0,6$$

enthält, wobei die Elemente in der Si-Al-N Schutzschicht im wesentlichen kovalent miteinander gebunden sind.

2. Magneto-optisches Speichermedium, das ein optisch transparentes Substrat (1) und eine magneto-optische Speicherschicht (3) und eine Schutzschicht (2,4) aufweist, die eine Seite der magneto-optischen Speicherschicht bedeckt, übereinander auf dem Substrat angeordnet, dadurch gekennzeichnet, daß die Schutzschicht Si-Al-O-N aufweist und durch Zerstäuben eines Targets gebildet ist, wobei das Target 20-33 atomare % N und Al und Si mit einem atomaren Prozentverhältnis von

$$0,4 \leq \frac{Al}{Si+Al} \leq 0,5$$

enthält, wobei die Elemente in der Si-Al-O-N Schutzschicht im wesentlichen kovalent miteinander gebunden sind.

3. Magneto-optisches Speichermedium nach Anspruch 1 oder Anspruch 2, worin die magneto-optische Speicherschicht (3) mit der Schutzschicht (2,4) auf ihren beiden Seiten bedeckt ist.

4. Magneto-optisches Speichermedium nach Anspruch 1 oder Anspruch 2, worin die magneto-optische Speicherschicht (3) auf einer ihrer Seiten mit der Schutzschicht (2,4) und auf ihrer anderen Seite mit einer Schutzschicht (2) bedeckt ist, die aus einem anderen Material als die Schutzschicht (4) besteht.

5. Magneto-optisches Speichermedium nach Anspruch 3 oder Anspruch 4, weiterhin aufweisend eine Reflexionsschicht (10), die direkt auf der magneto-optischen Speicherschicht (3) ausgebildet ist oder auf der Seite der Schutzschicht (4) ausgebildet ist, welche am weitesten von dem Substrat entfernt ist.

6. Magneto-optisches Speichermedium nach Anpruch 3 oder Anspruch 4, worin die Schutzschicht (4), die am weitesten von dem Substrat entfernt ist, von einem Decksubstrat (12) bedeckt ist.

7. Magneto-optisches Speichermedium nach Anspruch 5, worin die magneto-optische Speicherschicht (3) auf der Seite, die am weitesten von dem Substrat entfernt ist, die Schutzschicht (4), eine Reflexionsschicht (10) und die Deckschicht (12) übereinander in dieser Reihenfolge angeordnet hat, wobei die Deckschicht (12) auf die Reflexionsschicht (10) geklebt ist.

8. Magneto-optisches Speichermedium nach irgendeinem der vorhergehenden Ansprüche, worin die magneto-optische Speicherschicht (3) aus einer Seltenerdmetall (Re)-Eisen (Fe)-Kobalt (co)-Titan (Ti)-Legierung besteht, in der das Seltenerdmetall ein Element ist, das aus der Gruppe ausgewählt ist, die aus Terbium, Dysprosium, Gadolinium und Neodym besteht.

9. Doppelseitiges magneto-optisches Speichermedium, das erste und zweite magneto-optische Speichermedien jeweils nach irgendeinem der vorhergehenden Ansprüche aufweist, die miteinander verklebt sind.

# Fig. 1

# Fig. 3

# Fig. 4 A

HOLDING TIME (HOURS)

Fig. 2

AℓN

AℓSiN

2 θ / DEGREE

EP 0 233 062 B1

## Fig. 4 B

No. 42
No. 36
No. 39
No. 37, 40, 43

TRANSMITTANCE

HOLDING TIME (HOURS)

## Fig. 5

RATIO OF THE KERR ROTATION ANGLES $\theta_K/\theta_K$(TbFe)

$Tb_{30}Fe_{70}$
$Tb_{30}(Ti_5Fe_{95})_{70}$
$Tb_{30}(Ti_{10}Fe_{90})_{70}$
$Tb_{30}(Co_{10}Fe_{90})_{70}$
$Tb_{30}(Ti_3Co_{10}Fe_{87})_{70}$
$Tb_{30}(Ti_7Co_{10}Fe_{83})_{70}$
$Tb_{30}(Ti_{10}Co_{10}Fe_{80})_{70}$
$Tb_{30}(Ti_{15}Co_{10}Fe_{75})_{70}$

## Fig. 6

## Fig. 7

## Fig. 8

## Fig. 9